# EUROPEAN PATENT APPLICATION

(11) **EP 1 386 760 A1**
(43) Date of publication of application: **04.02.2004**
(21) Application number: 02710889.3
(22) Date of filing: 04.02.2002
(51) Int. Cl.: B60C 29/02

(54) **CONVENTIONAL INNER TUBE ADAPTER**

(30) Priority: 05.02.2001 ES 200100269
(71) Applicant: Jimenez Rivero, D. José Carlos, E-41910 Coca de la Pinero (ES)
(72) Inventor: Jimenez Rivero, D. José Carlos, E-41910 Coca de la Pinero (ES)
(74) Representative: Esteban Perez-Serrano, Maria Isabel
(86) International application number: PCT/ES2002/000052
(87) International publication number: WO 2002/062600

(57) **Abstract**

A piece that is fitted to the valve of an inner tube, where said valve is secured to the inner tube by vulcanizing, for use on tyres not requiring an inner tube, said piece being of tubular shape where the inner surface of the tubular portion is threaded, and provided on the outside with a series of shoulders which have the function of ensuring that, when installed on a tyre of the type not requiring an inner tube, the assembly fits tightly to the wheel rim so that it cannot move.

## Description

### OBJECT OF THE INVENTION

The present invention refers to an adapter for a motor vehicle tyre inner tube, thanks to which it may be used in tyres not requiring a tube, thereby improving the performance of the vehicle considerably. All this is further supplemented by the ease with which the object of the invention may be installed and repaired.

### PRIOR ART

Powered vehicles using tyres have continued to develop since their initial states. Throughout history there has been an ongoing search for the way to achieve the best possible contact of the vehicle with the ground.

At present there are two main types of motor vehicle tyre, which may be divided into:
- Tyres that have an inner tube.
- Tyres that are not provided with an inner tube.

Although these two types of tyre have similar features, they also exhibit noticeable differences in performance. The invention referred to in this application largely solves the problems associated with each of the two types of tyre, achieving a "hybrid" of the two that combines the best features of both.

### DESCRIPTION OF THE INVENTION

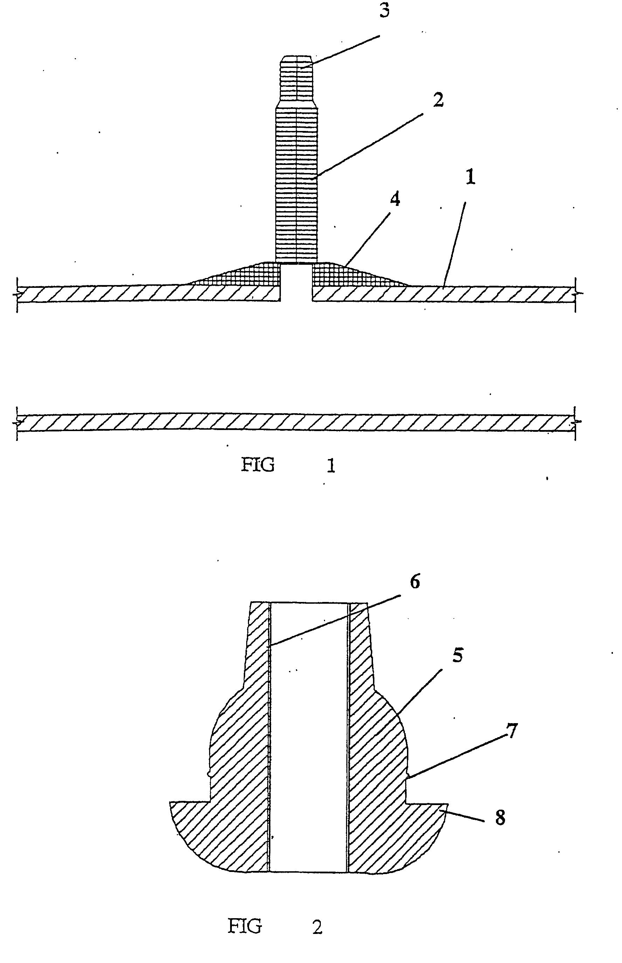

The tube that we are going to adapt is a conventional inner tube with the same physical properties as any of those fitted to motor vehicles today. The innovation lies in the valve that is attached to the aforesaid tube. Hitherto inner tubes have been made in such a way that the valve is attached thereto by means of a vulcanizing process, leading to a final arrangement of the components as may be seen in figure 1.

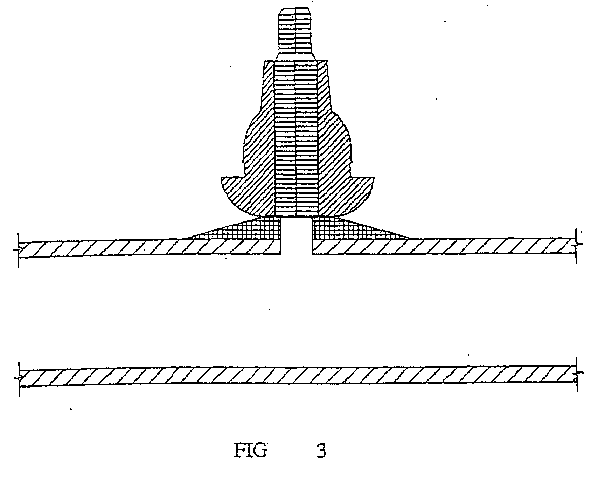

The invention in question here is based on adapting this valve to one of similar characteristics to those used on other types of tyres. Specifically, the innovative feature of the invention is the modification of this valve so that it works in the same way as one of the type used on tubeless tyres. The invention proposed does not entail a modification of the original tube, rather, to achieve the objective, it suffices to modify the rubber body of the valve used in tubeless tyres by providing this body with an internal thread by which it will be attached to the valve that is normally fitted to tubed tyres (see figure 3).

The tube that is the object of this invention offers a solution to a series of technical problems associated with the two types of tyre that are currently fitted to motor vehicles. These problems could be summarized as follows:
- When a tubeless tyre is working at low pressure, an impact with an object with a jutting edge may displace the tyre bead, so that the air escapes from the inside, which means that it has to be repaired. This situation arises when operating with vehicles on muddy or sandy terrain, as tyre pressure is lowered in these circumstances in order to achieve a larger ground contact area, which reduces the depth to which the vehicle sinks into the ground. It may also arise on any urban vehicle when the owner has not followed a proper maintenance schedule. With tubed tyres this problem does not arise as bead displacement would not lead to a loss of air pressure because the inner tube would prevent it.
- When compared with a tubeless tyre, a tubed one has the disadvantage that in the hypothetical event of its being punctured it quickly loses the air pressure it contains because air leaks occur in the area where the tube valve is installed. This does not happen with tubeless tyres, however, as the valve they have fitted prevents the air from escaping through the hole in the wheel of the vehicle where it is mounted.

It may be seen that the tube proposed by the invention overcomes both of the problems set forth above in that:
- In the event of a puncture, the tyre would behave like a tubeless tyre, as leakage past its valve is prevented.
- In the event of bead displacement, air leakage would not take place either, as in this case the tyre would behave like a tubed tyre.

Accordingly, this new tyre represents an improvement in tyre performance over currently existing ones as well as an improvement in the passive safety of the vehicle since, in case of accident, we increase the possibilities of keeping the tyres full of air, so that the steerability and manoeuvrability of the vehicle are retained for a longer time.

### SHORT DESCRIPTION OF THE DRAWINGS

Figure 1.- It shows a valve like those used on tubed tyres.
Figure 2.- It shows a sectional view of the object of the invention.
Figure 3.- It shows a section of the object of the invention already fitted to a conventional tyre inner tube valve.

### DESCRIPTION OF A FORM OF PREFERRED EMBODIMENT

In the light of the above-mentioned figures, it may be observed that the device is made up of one piece which is attached to the body 2 of the valve of a conventional inner tube secured to the latter by vulcanizing (4), with the result that it may be used on tyres not intended for the use of inner tubes.

The piece that is the object of the invention consists of a single bulb-shaped body 5, in which an internal hole 6 is drilled and which is threaded for securing it to the valve core 2. The dimensions will be variable so that the end section of the valve core 3 projects so as to be able to fit the valve cap.

In order to assure the tightness of the joint and make certain that no air escapes past this contact surface, an adhesive is applied to said surface at the time of installation.

The outside surface of the object of the invention is provided with a series of shoulders, which have the following function. Shoulders 7 and 8 are provided so as to ensure that, when installed on a tyre not requiring an inner tube, the assembly fits snugly to the wheel rim and cannot move.

## Claims

1. Inner tube adapter **characterised in that** consists of a single bulb shaped body (5) which has an internal hole (6) drilled along its length, where the drill presents its surface threaded along its whole length, the adapter is secured to the body of a valve (2) with the aid of an adhesive. It also presents dimensions which allows the end section (3) of the body of the valve (2) emerging allowing to fit on it a valve cap. It is used for tubeless tyre.

2. Inner tube adapter according to claim 1, **characterized in that** the valve (2) is of the long-core type.
